# EUROPEAN PATENT SPECIFICATION

(11) **EP 3 061 639 B1**
(45) Date of publication and mention of the grant of the patent: **18.07.2018**
(21) Application number: 15185198.7
(22) Date of filing: 15.09.2015
(51) Int. Cl.: B60K 15/063, E02F 9/08, B60Q 1/04, B60Q 1/02, B60S 1/50

(54) **FLUID STORAGE TANK FOR VEHICLES**
FLÜSSIGKEITSAUFBEWAHRUNGSTANK FÜR FAHRZEUGE
RÉSERVOIR DE STOCKAGE DE FLUIDE POUR VÉHICULES

(30) Priority: 27.02.2015 EP 15290052
(43) Date of publication of application: 31.08.2016
(73) Proprietor: AGCO International GmbH, 8212 Neuhausen am Rheinfall (CH)
(72) Inventor: Ferri, Fabrice, 60026 Beauvais (FR)
(74) Representative: AGCO Intellectual Property Department

(56) References cited:
- EP-A1- 2 135 798
- FR-A1- 2 598 129

## Description

### FIELD OF INVENTION

The invention relates to fluid storage tanks for vehicles especially, but not exclusively, to agricultural self-propelled sprayers.

### BACKGROUND

Ever more stringent exhaust emission regulations are forcing manufacturers of vehicles with internal combustion engines to integrate more advanced emission treatment systems onto the vehicles produced. Selective catalytic reduction (SCR) is one example exhaust emission treatment system which involves the injection of a treatment fluid, more specifically diesel exhaust fluid (DEF), into the exhaust stream to assist in the removal of harmful emissions from the engine exhaust flow. One known downside of SCR is the requirement for an additional fluid storage tank on the vehicle. Accommodating such presents a challenge to vehicle manufacturers, especially for those vehicles where space is at a premium.

EP-2,135,798 A1 discloses a vehicle according to the preamble of claim 1, the fluid reservoir having an outer contour defined by rotation casting. The outer contour includes a portion shaped to accept a headlight attachment.

### SUMMARY OF INVENTION

In accordance with the invention there is provided a vehicle comprising a moulded fluid storage tank having an exterior profile, and a lighting unit retained by a lighting unit support portion moulded into the exterior profile, characterised in that the support portion comprises a passage extending from a first face of the tank to a second face of the tank.

The invention exploits the available space around the vehicle exterior lighting units by moulding a supporting structure into the exterior profile or contours of a fluid tank so the lighting units can be supported by the tank structure itself. Advantageously, this dispenses with the need for separate brackets for the lighting units and, moreover, utilises the available volume in the vicinity of the lighting units to store fluid.

The support portion comprises a passage, tube or channel extending from a first face of the tank to a second face of the tank. In such a case, the lens of the lighting unit can be disposed at one end of the passage (facing outwards from the vehicle) and electrical connections to the light unit can be attached via the opposite (inner) end of the passage.

The passage may be aligned generally fore and aft with respect to a longitudinal axis of the vehicle so that lighting units are directed forwardly (in the case of a front light) or rearwardly (in the case of a rear light). It should be appreciated that the passage may instead be directed at an angle to the longitudinal axis, for example in the case of a corner-mounted direction indicator light.

The passage preferably has a circular cross section so as to easily accommodate 'off-the-shelf' automotive lighting components. However, other shaped passages are envisaged.

The invention lends itself particularly well when the fluid storage tank is configured to store a DEF such as Adblue (registered trade mark). In such a case, the tank is provided in addition to a fuel tank and is in fluid communication with an engine exhaust treatment system. As mentioned above, manufacturers face a challenge today to accommodate the additional tank for exhaust treatment fluid. The invention utilises the space in the immediate vicinity of the light units.

Advantageously, the exhaust treatment fluid tank is provided with holders or supports for the light (or lamp) units thus dispensing with the need for separate brackets thus saving on component count, cost and improving ease of assembly.

Alternatively, the tank may be configured to store other fluids such as engine coolant, fuel or windscreen washer fluid by way of example.

In a preferred embodiment the storage tank is located at the front end of the vehicle. More preferably the storage tank includes integrated supports or holder for both left-hand and right-hand lights and thus extends substantially across the width of the vehicle. A front face of the tank may serve as a front collision bumper for the vehicle.

The DEF tank may be juxtaposed to a fuel tank. In the case that the tank is configured for storing DEF, the filler caps for both tanks can conveniently be located near to one another. Not only is this convenient for the operator, but also reduces the risk of the operator forgetting to fill the DEF tank.

The invention lends itself particularly well to utility vehicles. However, it is not limited to such and can be applied to all highway-going vehicles. In particular, a self-propelled agricultural sprayer may embody the invention. In such case, the storage tank may instead be utilised for storing additional fluid for crop application, such as pesticide.

### BRIEF DESCRIPTION OF DRAWINGS

Further advantages of the invention will become apparent from reading the following description of a specific embodiment in which:
Figure 1 is a front view of a self-propelled agricultural sprayer in accordance with an embodiment of the invention;
Figure 2 is a front right perspective view of the front lower part of the sprayer of Figure 1;
Figure 3 is a front right perspective view of the front lower part of the sprayer of Figure 1 showing the trim removed to reveal the fuel tank and Adblue tank;
Figure 4 is a rear left perspective view of the Adblue tank of Figure 3; and,
Figure 5 is a front view of the Adblue tank of Figure 3.

### DETAILED DESCRIPTION OF A SPECIFIC EMBODIMENT

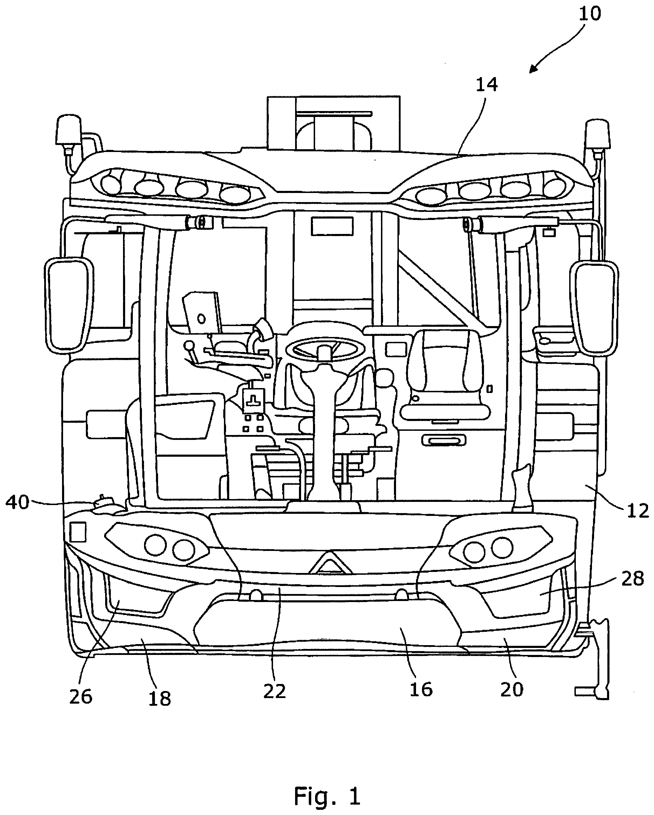

An example embodiment of the invention will now be described. Relative terms such as 'front', 'rear', 'left', 'right', 'longitudinal' and 'transverse' will be made with reference to the longitudinal axis of the sprayer of Figure 1 travelling in the normal forward direction of travel.

Figure 1 shows a front view of a self-propelled agricultural sprayer 10 comprising a chassis, an engine, a plurality of suspended wheels, a storage tank 12 for the fluid to be applied to a crop field, a drivers cab 14 and a foldable boom for supporting a plurality of transversely spaced spray nozzles. Such a machine architecture is well known and reference is invited to WO-2010/020605 which discloses an example of such.

Sprayer 10 further comprises a tank 16 for the storage of Diesel Exhaust Fluid (DEF), the tank being located at the front of the sprayer 10 below the height of the cab 14. The DEF tank 16 is formed from plastic which is blow-moulded into shape which defines an internal and an external profile. Alternatively, other known moulding processes may be employed.

The DEF tank 16 extends across the width of the sprayer and has a generally convex front surface 17 which, together with trim panels 18, 20, 22 present a front-facing side to sprayer 10. The front surface 17 of DEF tank comprises a curved arc protrusion 24 which wraps transversely around a lower edge of the DEF tank 16. Trim panels 18, 20, 22 abut around the top and side edges of protrusion 24 leaving it exposed to form a front collision bumper.

A further two protrusions 26, 28 are defined in the front side of DEF tank 16 around which the trim panels are fitted so as to leave the protrusions 26, 28 exposed. The DEF tank 16 (and thus protrusions 24, 26, 28) are formed of a first colour plastic whilst the trim panels 18, 20, 22 are formed of plastic of a different colour. The colour coordination between the protrusions and the trim panels reduces the need for adhesive coloured plastic decal which is often difficult to reliably stick to plastic.

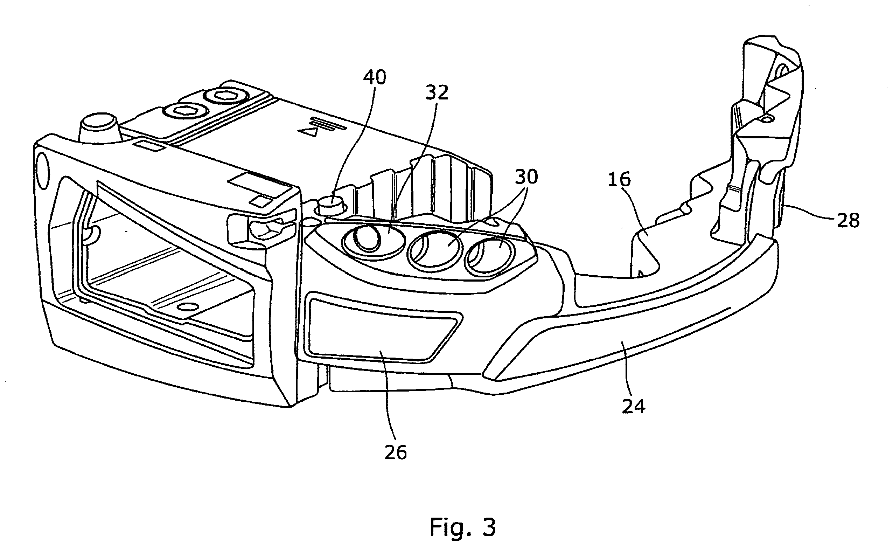

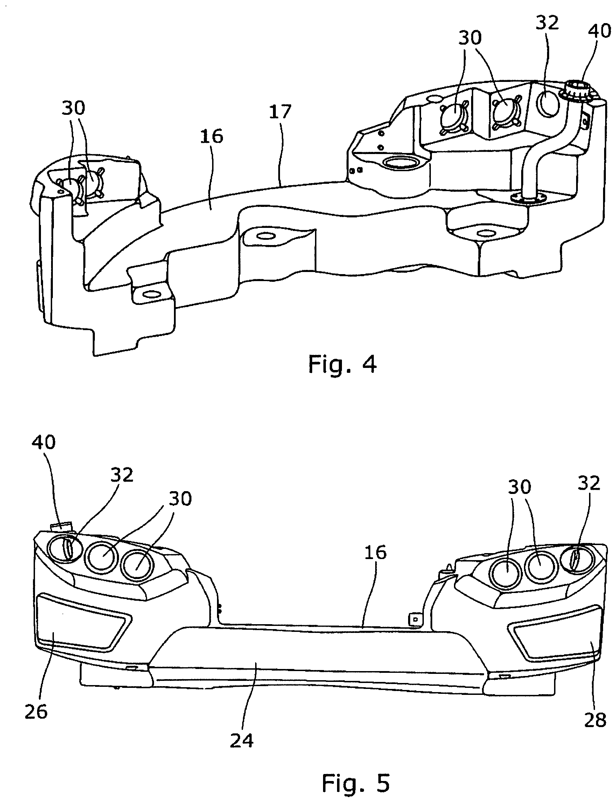

As can be seen from Figures 3, 4 and 5, the exterior profile of DEF tank is shaped to fit around, and accommodate, other components of the sprayer. In particular, and in accordance with the present invention, the exterior profile defines a plurality of light unit, or lamp, supports including four headlight supports 30, and two direction indicator supports 32 as best seen in Figure 5.

Each headlight support 30 comprises a hollow passage or sleeve having a generally circular cross section, the passage being open to the front and rear and extending in a generally longitudinal direction. Each direction indicator support 32 similarly comprises a hollow passage but extending at an angle to the longitudinal axis so as to point the direction indicator lamps retained therein outwardly from the front corners of the sprayer 10.

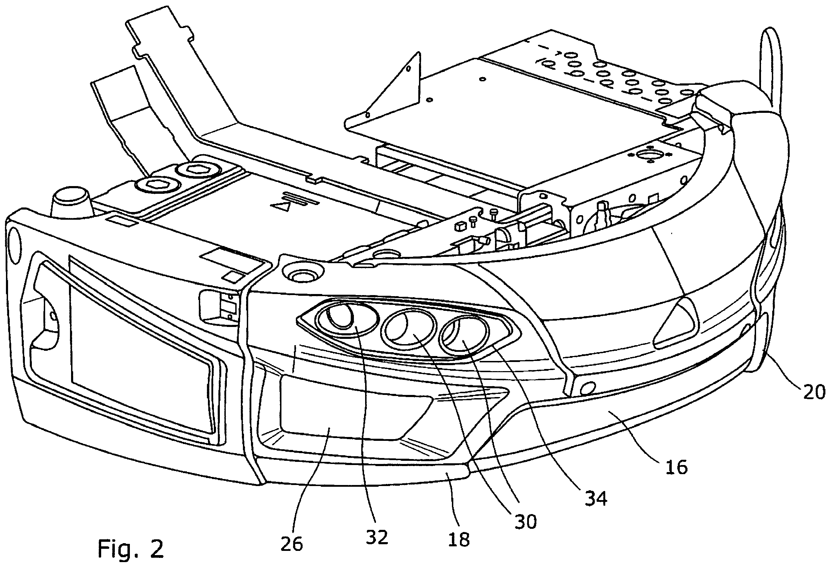

Figures 2 to 5 show the light supports 30, 32 empty of light units for clarity. Figure 1 shows the light units installed. It should be appreciated that the simple cylindrical passages and circular apertures of the supports 30, 32 offer convenient installation of standard 'off-the-shelf' automotive lamp components wherein the units can be simply press-fitted into the outward-facing aperture of the given support. Access to the light units for electrical connections thereto can be achieved view the inward-facing apertures.

Side trim plates 18, 20 each include an aperture 34 which surrounds the respective cluster of lights including a pair of headlights and a direction indicator light for each side.

A filler spout 40 is connected to the top of DEF tank 16 and, in this example, is located at a convenient height on the right-hand side. Sprayer 10 further comprises a fuel tank 42 that is located at a location immediately behind the DEF tank 16 on the right-hand side. Conveniently, an operator can access the filler spouts of both the fuel tank 42 and DEF tank 16 from a single location.

It should be emphasized that the above-described embodiment of the present disclosure is merely a possible example of implementation, merely set forth for a clear understanding of the principles of the disclosure. Many variations and modifications may be made to the above-described embodiment of the disclosure without departing substantially from the spirit and principles of the disclosure.

## Claims

1. A vehicle (10) comprising a moulded fluid storage tank (16) having an exterior profile, and a light unit retained by a light unit support portion (30,32) moulded into the exterior profile, **characterised in that** the support portion comprises a passage extending from a first face of the tank to a second face of the tank.

2. A vehicle according to Claim 1, wherein the passage is aligned generally fore and aft with respect to a longitudinal axis of the vehicle.

3. A vehicle according to Claim 1 or 2, wherein the passage has a circular cross section.

4. A vehicle according to any preceding claim, wherein the storage tank is in fluid communication with an engine exhaust treatment system and the tank is configured to store a diesel exhaust fluid.

5. A vehicle according to any preceding claim, wherein the storage tank is located at the front end of the vehicle.

6. A vehicle according to Claim 5, comprising a left-hand forward facing light cluster and a right-hand forward facing light cluster, wherein each light cluster is retained in at least one separate passage.

7. A vehicle according to Claim 5 or 6, wherein a forward-facing exterior surface of the tank serves as a front bumper.

8. A utility vehicle according to any preceding claim.

9. A self-propelled agricultural sprayer according to any preceding claim.

10. A sprayer according to Claim 9, wherein the tank is in fluid communication with a material application system located on an applicator boom.

## Patentansprüche

1. Fahrzeug (10) mit einem geformten/gegossenen/gespitzten Flüssigkeitsspeicherbehälter (16) mit einem äußeren Profil, und einer Lichteinheit, die in einem Lichteinheit-Stützteil (30, 32) gehalten ist, das in dem äußeren Profil geformt/gegossen/gespitzt ist, **dadurch gekennzeichnet, dass** der Stützteil einen Durchgang aufweist, der sich von einer ersten Oberfläche des Behälters zu einer zweiten Oberfläche des Behälters erstreckt.

2. Fahrzeug nach Anspruch 1, wobei der Durchgang grundsätzlich längs einer Längsachse des Fahrzeugs ausgerichtet ist.

3. Fahrzeug nach Anspruch 1 oder 2, wobei der Durchgang einen kreisförmigen Querschnitt besitzt.

4. Fahrzeug nach einem der vorhergehenden Ansprüche, wobei der Speicherbehälter flüssigkeitsmäßig mit einem Motorabgas-Behandlungssystem kommuniziert und der Behälter zum Speichern eines Dieselzusatzes zur Verminderung des Schadstoffausstoßes (DEF) konfiguriert ist.

5. Fahrzeug nach einem der vorhergehenden Ansprüche, wobei der Speicherbehälter am vorderen Ende des Fahrzeug angeordnet ist.

6. Fahrzeug nach Anspruch 5, mit einer linken nach vorne weisenden Lichtergruppe und einer rechten nach vorne weisenden Lichtergruppe, wobei jede Lichtergruppe in mindestens einem separaten Durchgang gehalten ist.

7. Fahrzeug nach Anspruch 5 oder 6, wobei eine nach vorne weisende äußere Oberfläche des Behälters als vordere Stoßstange dient.

8. Nutzfahrzeug nach einem der vorhergehenden Ansprüche.

9. Selbstfahrender landwirtschaftlicher Sprüher nach einem der vorhergehenden Ansprüche.

10. Sprüher nach Anspruch 9, wobei der Behälter flüssigkeitsmäßig mit einem Materialaufbringungssystem kommuniziert, das an einem Aufbringungsausleger angeordnet ist.

## Revendications

1. Véhicule (10) comprenant un réservoir de stockage de fluide moulé (16) ayant un profilé extérieur, et une unité de lumière retenue par une portion de support d'unité de lumière (30, 32) moulée dans le profilé extérieur, **caractérisé en ce que** la portion de support comprend un passage s'étendant d'une première face du réservoir à une seconde face du réservoir.

2. Véhicule selon la revendication 1, dans lequel le passage est aligné généralement à l'avant et à l'arrière par rapport à un axe longitudinal du véhicule.

3. Véhicule selon la revendication 1 ou 2, dans lequel le passage a une section en coupe circulaire.

4. Véhicule selon l'une quelconque des revendications précédentes, dans lequel le réservoir de stockage est en communication fluidique avec un système de traitement d'échappement de moteur et le réservoir est configuré pour stocker un fluide d'échappement de diesel.

5. Véhicule selon l'une quelconque des revendications précédentes, dans lequel le réservoir de stockage est situé au niveau de l'extrémité avant du véhicule.

6. Véhicule selon la revendication 5, comprenant un groupe de lumière orienté vers l'avant gauche et un groupe de lumière orienté vers l'avant droit, dans lequel chaque groupe de lumière est retenu dans au moins un passage séparé.

7. Véhicule selon la revendication 5 ou 6, dans lequel une surface extérieure orientée vers l'avant du réservoir sert de pare-chocs avant.

8. Véhicule utilitaire selon l'une quelconque des revendications précédentes.

9. Pulvérisateur agricole autopropulsé selon l'une quelconque des revendications précédentes.

10. Pulvérisateur selon la revendication 9, dans lequel le réservoir est en communication fluidique avec un système d'application de matériau situé sur une rampe applicatrice.
